# EUROPEAN PATENT APPLICATION

(11) **EP 4 842 097 A1**
(43) Date of publication of application: **18.11.2026**
(21) Application number: 25747751.3
(22) Date of filing: 23.01.2025
(51) Int. Cl.: H04W 72/04

(54) **COMMUNICATION METHOD AND APPARATUS**

(30) Priority: 02.02.2024 CN 202410164194
(71) Applicant: Huawei Technologies Co., Ltd., Shenzhen, Guangdong 518129 (CN)
(72) Inventor: HOU, Hailong, Shenzhen, Guangdong 518129 (CN); GUO, Zhiheng, Shenzhen, Guangdong 518129 (CN); LU, Shaozhong, Shenzhen, Guangdong 518129 (CN)
(74) Representative: Huawei European IPR
(86) International application number: PCT/CN2025/074303
(87) International publication number: WO 2025/162182

(57) **Abstract**

A communication method and apparatus are provided, to improve signal coverage performance of a terminal device in a radio resource control idle state or a radio resource control inactive state. A first communication apparatus receives a first synchronization signal/physical broadcast channel block and a first channel state information-reference signal in a radio resource control idle state or a radio resource control inactive state, where the first synchronization signal/physical broadcast channel block is one of M synchronization signal/physical broadcast channel blocks, the first channel state information-reference signal is one of N channel state information-reference signals, there is a correspondence between the M synchronization signal/physical broadcast channel blocks and the N channel state information-reference signals, and N is greater than or equal to M. The first communication apparatus receives, in the radio resource control idle state or the radio resource control inactive state, a first physical downlink control channel based on the first channel state information-reference signal, or receives a first physical downlink shared channel based on the first synchronization signal/physical broadcast channel block or the first channel state information-reference signal.

## Description

### CROSS-REFERENCE TO RELATED APPLICATIONS

This application claims priority to Chinese Patent Application No. 202410164194.2, filed with the China National Intellectual Property Administration on February 2, 2024 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

The fifth-generation (fifth-generation, 5G) mobile communication technology new radio (new radio, NR) has been rapidly put into commercial use worldwide in recent years, and has achieved great business success. Currently, research on the next generation, that is, the sixth-generation (sixth-generation, 6G) mobile communication system, has also begun. Compared with the 5G technology, 6G supports higher service rates, lower service latency, and the like, and therefore has higher requirements on spectrum.

For terminal devices in a radio resource control (radio resource control, RRC) idle (idle) state or an RRC inactive (inactive) state, how to improve signal coverage performance is an urgent technical problem to be resolved.

### SUMMARY

This application provides a communication method and apparatus, to improve signal coverage performance of a terminal device in an RRC idle state or an RRC inactive state.

According to a first aspect, a communication method is provided. The method may be implemented by a first communication apparatus or a terminal apparatus. The first communication apparatus may be a terminal device. The first communication apparatus may alternatively be a component in the terminal device. The component in this application may include, for example, at least one of a chip, a chip system, a processor, a transceiver, a processing unit, or a transceiver unit. For example, an execution body is the first communication apparatus. The communication method provided in this application may include the following steps: The first communication apparatus receives a first synchronization signal/physical broadcast channel block (synchronization signal/physical broadcast channel block, SSB) and a first channel state information-reference signal (channel state information-reference signal, CSI-RS) in an RRC idle state or an RRC inactive state, where the first SSB is one of M SSBs, the first CSI-RS is one of N CSI-RSs, there is a correspondence between the M SSBs and the N CSI-RSs, both M and N are positive integers greater than or equal to 1, and N is greater than or equal to M. The first communication apparatus receives a first physical downlink control channel in the RRC idle state or the RRC inactive state based on the first CSI-RS, or receives a first physical downlink shared channel in the RRC idle state or the RRC inactive state based on the first SSB or the first CSI-RS, where the first physical downlink control channel is used to schedule the first physical downlink shared channel.

Based on the first aspect, the first communication apparatus may receive, in the RRC idle state or the RRC inactive state, the first physical downlink control channel based on the first SSB, or may receive the first physical downlink shared channel based on the first SSB or the first CSI-RS, where the first SSB is one of the M SSBs, the first CSI-RS is one of the N CSI-RSs, and there is the correspondence between the M SSBs and the N CSI-RSs. Therefore, downlink transmission may be performed based on the CSI-RS and the SSB, so that channel coverage performance of the terminal device in an initial access procedure can be improved. In addition, according to the method, channel coverage can be enhanced without increasing a quantity of SSBs or with as little increase in a quantity of SSB beams as possible. In other words, resource overheads of a reference signal can be reduced as much as possible while channel coverage in the initial access procedure is improved.

In this application, in some cases, the "channel" may optionally be replaced with a "channel/signal" or a "signal".

The first physical downlink control channel and/or the first physical downlink control channel may be from a second communication apparatus. The second communication apparatus may be an access network device, for example, a base station.

In a possible implementation, the first communication apparatus may receive the first physical downlink control channel based on the first CSI-RS, where the first physical downlink control channel is one of N physical downlink control channels, and there is a correspondence between the N physical downlink control channels and the N CSI-RSs.

In this implementation, optionally, the N physical downlink control channels may be physical downlink control channels that are repeatedly transmitted.

In a possible implementation, that there is the correspondence between the N physical downlink control channels and the N CSI-RSs includes: the N physical downlink control channels are quasi co-located (quasi co-location, QCL) with the N CSI-RSs; or demodulation reference signals (demodulation reference signals, DMRSs) of the N physical downlink control channels are quasi co-located with the N CSI-RSs.

Quasi co-location means that a large-scale parameter of a channel over which a symbol on one antenna port (antenna port, AP) (or a port for short) is conveyed can be inferred from a channel over which a symbol on another antenna port is conveyed. In other words, it may be considered that the two antenna ports are quasi co-located. When two quasi co-located channels/signals are received, one channel/signal can be received in the same manner as the other channel/signal, so that receiving complexity can be reduced, and receiving performance can be improved. Therefore, based on this implementation, receiving complexity of the first physical downlink control channel can be reduced, and receiving performance can be improved.

The N physical downlink control channels may be in one-to-one correspondence with the N CSI-RSs. Any one of the N physical downlink control channels is quasi co-located with a CSI-RS, in the N CSI-RSs, corresponding to the physical downlink control channel; or a DMRS of any one of the N physical downlink control channels is quasi co-located with a CSI-RS, in the N CSI-RSs, corresponding to the physical downlink control channel.

In a possible implementation, the first communication apparatus may receive the first physical downlink shared channel based on the first SSB, where the first physical downlink shared channel is one of M physical downlink shared channels, and there is a correspondence between the M physical downlink shared channels and the M SSBs.

In a possible implementation, that there is the correspondence between the M physical downlink shared channels and the M SSBs includes: the M physical downlink shared channels are quasi co-located with the M SSBs; or DMRSs of the M physical downlink shared channels are quasi co-located with the M SSBs.

The M physical shared control channels may be in one-to-one correspondence with the M SSBs. Any one of the M physical downlink shared channels is quasi co-located with an SSB, in the M SSBs, corresponding to the physical downlink shared channel; or a DMRS of any one of the M physical downlink shared channels is quasi co-located with an SSB, in the M SSBs, corresponding to the physical downlink shared channel.

Based on this implementation, receiving complexity of the first physical downlink shared channel can be reduced, and receiving performance can be improved.

In a possible implementation, the first communication apparatus may receive the first physical downlink shared channel based on the first CSI-RS, where the first physical downlink shared channel is one of N physical downlink shared channels, and there is a correspondence between the N physical downlink shared channels and the N CSI-RSs.

In a possible implementation, that there is the correspondence between the N physical downlink shared channels and the N CSI-RSs includes: the N physical downlink shared channels are quasi co-located with the N CSI-RSs; or demodulation reference signals DMRSs of the N physical downlink shared channels are quasi co-located with the N CSI-RSs.

The N physical shared control channels may be in one-to-one correspondence with the N CSI-RSs. Any of the N physical downlink shared channels is quasi co-located with a CSI-RS, in the N CSI-RSs, corresponding to the physical downlink shared channel; or a DMRS of any one of the N physical downlink shared channels is quasi co-located with a CSI-RS, in the N CSI-RSs, corresponding to the physical downlink shared channel.

Based on this implementation, receiving complexity of the first physical downlink shared channel can be reduced, and receiving performance can be improved.

In a possible implementation, each of the N physical downlink shared channels carries a system information block (system information block, SIB); each of the M physical downlink shared channels carries a system information block SIB; each of the N physical downlink shared channels carries a paging message; or each of the M physical downlink shared channels carries a paging message.

Based on this implementation, the first physical downlink shared channel in this application may carry the SIB or the paging message.

In a possible implementation, the first communication apparatus may receive the first physical downlink control channel based on the first CSI-RS, where there is a correspondence between the first physical downlink control channel and the first CSI-RS.

In a possible implementation, that there is the correspondence between the first physical downlink control channel and the first CSI-RS includes: the first physical downlink control channel is quasi co-located with the first CSI-RS; or a demodulation reference signal DMRS of the first physical downlink control channel is quasi co-located with the first CSI-RS.

Based on this implementation, receiving complexity of the first physical downlink control channel can be reduced, and receiving performance can be improved.

In a possible implementation, the first communication apparatus may receive the first physical downlink shared channel based on the first CSI-RS, where there is a correspondence between the first physical downlink shared channel and the first CSI-RS.

In a possible implementation, that there is the correspondence between the first physical downlink shared channel and the first CSI-RS includes: the first physical downlink shared channel is quasi co-located with the first CSI-RS; or a demodulation reference signal DMRS of the first physical downlink shared channel is quasi co-located with the first CSI-RS.

Based on this implementation, receiving complexity of the first physical downlink shared channel can be reduced, and receiving performance can be improved.

In a possible implementation, the first physical downlink shared channel carries a random access message 2, a random access message B, or a random access message 4.

In a possible implementation, the first communication apparatus may further send a random access preamble (preamble) by using a first physical random access channel (physical random access channel, PRACH) resource, where there is a correspondence between the first PRACH resource and the first CSI-RS.

Based on this implementation, the network device may send only the first physical downlink control channel and the first physical downlink shared channel that correspond to the first CSI-RS, and does not need to send physical downlink control channels and physical downlink shared channels that correspond to all the N CSI-RSs, so that transmission overheads can be reduced.

In a possible implementation, that there is the correspondence between the M SSBs and the N CSI-RSs includes: any one of the M SSBs is quasi co-located with Q CSI-RSs of the N CSI-RSs, where Q is a positive integer greater than or equal to 1. In other words, any one of the M SSBs may be quasi co-located with one or more of the N CSI-RSs, so that flexible transmission can be implemented.

In a possible implementation, any one of the M SSBs indicates configuration information of one or more of the N CSI-RSs, and the configuration information includes at least one of the following configuration information: time domain resource information, frequency domain resource information, code domain resource information, and power control information.

Based on this implementation, any one of the M SSBs may indicate one or more of time domain resource information, frequency domain resource information, code domain resource information, or power control information of one or more of the N CSI-RSs, to implement flexible CSI-RS configuration.

According to a second aspect, a communication method is provided. The method may be implemented by a second communication apparatus or a network apparatus. The second communication apparatus may be an access network device (or may be replaced with a network device, for example, a base station). The second communication apparatus may alternatively be a component in the access network device. The component in this application may include, for example, at least one of a chip, a chip system, a processor, a transceiver, a processing unit, or a transceiver unit. For example, an execution body is the second communication apparatus. The communication method provided in this application may include the following steps: The second communication apparatus sends M SSBs and N CSI-RSs, where there is a correspondence between the M SSBs and the N CSI-RSs, both M and N are positive integers greater than or equal to 1, and N is greater than or equal to M. The second communication apparatus sends a first physical downlink control channel, where there is a correspondence between the first physical downlink control channel and a first CSI-RS, and the first CSI-RS is one of the N CSI-RSs, or the second communication apparatus sends a first physical downlink shared channel, where there is a correspondence between the first physical downlink shared channel and the first CSI-RS or a first SSB, the first CSI is one of the N CSI-RSs, the first SSB is one of the M SSBs, and the first physical downlink control channel is used to schedule the first physical downlink shared channel. The first physical downlink shared channel may be used to carry one of a SIB, a paging message, a random access message 2, a random access message B, or a random access message 4.

That there is the correspondence between the first physical downlink control channel and the first CSI-RS may be understood as that the first physical downlink control channel is transmitted based on the first CSI-RS. That there is the correspondence between the first physical downlink shared channel and the first CSI-RS may be understood as that the first physical downlink shared channel is transmitted based on the first CSI-RS. That there is the correspondence between the first physical downlink shared channel and the first SSB may be understood as that the first physical downlink shared channel is transmitted based on the first SSB.

In a possible implementation, the second communication apparatus may send N physical downlink control channels, where the first physical downlink control channel is one of the N physical downlink control channels, and there is a correspondence between the N physical downlink control channels and the N CSI-RSs.

In a possible implementation, that there is the correspondence between the N first physical downlink control channels and the N CSI-RSs includes: the N physical downlink control channels are quasi co-located with the N CSI-RSs; or demodulation reference signals DMRSs of the N physical downlink control channels are quasi co-located with the N CSI-RSs.

In a possible implementation, the second communication apparatus may send M physical downlink shared channels, where the first physical downlink shared channel is one of the M physical downlink shared channels, and there is a correspondence between the M physical downlink shared channels and the M SSBs.

In a possible implementation, that there is the correspondence between the M physical downlink shared channels and the M SSBs includes: the M physical downlink shared channels are quasi co-located with the M SSBs; or demodulation reference signals DMRSs of the M physical downlink shared channels are quasi co-located with the M SSBs.

In a possible implementation, the second communication apparatus may send N physical downlink shared channels, where the first physical downlink shared channel is one of the N physical downlink shared channels, and there is a correspondence between the N physical downlink shared channels and the N CSI-RSs.

In a possible implementation, that there is the correspondence between the N physical downlink shared channels and the N CSI-RSs includes:
the N physical downlink shared channels are quasi co-located with the N CSI-RSs; or
demodulation reference signals DMRSs of the N physical downlink shared channels are quasi co-located with the N CSI-RSs.

In a possible implementation, each of the N physical downlink shared channels carries a system information block SIB; each of the M physical downlink shared channels carries a system information block SIB; each of the N physical downlink shared channels carries a paging message; or each of the M physical downlink shared channels carries a paging message.

In a possible implementation, there is the correspondence between the first physical downlink control channel and the first CSI-RS, and the first CSI-RS is one of the N CSI-RSs.

In a possible implementation, that there is the correspondence between the first physical downlink control channel and the first CSI-RS includes: the first physical downlink control channel is quasi co-located with the first CSI-RS; or a demodulation reference signal DMRS of the first physical downlink control channel is quasi co-located with the first CSI-RS.

In a possible implementation, there is the correspondence between the first physical downlink shared channel and the first CSI-RS, and the first CSI-RS is one of the N CSI-RSs.

In a possible implementation, that there is the correspondence between the first physical downlink shared channel and the first CSI-RS includes:
the first physical downlink shared channel is quasi co-located with the first CSI-RS; or
a demodulation reference signal DMRS of the first physical downlink shared channel is quasi co-located with the first CSI-RS.

In a possible implementation, the first physical downlink shared channel carries a random access message 2, a random access message B, or a random access message 4.

In a possible implementation, the second communication apparatus may further receive a preamble by using a first PRACH resource, where there is a correspondence between the first PRACH resource and the first CSI-RS, and the first CSI-RS is one of the N CSI-RSs.

In a possible implementation, that there is the correspondence between the M SSBs and the N CSI-RSs includes: any one of the M SSBs is quasi co-located with Q CSI-RSs of the N CSI-RSs, where Q is a positive integer greater than or equal to 1.

In a possible implementation, any one of the M SSBs indicates configuration information of one or more of the N CSI-RSs, and the configuration information includes at least one of the following configuration information: time domain resource information, frequency domain resource information, code domain resource information, and power control information.

For technical effects brought by the second aspect, refer to the descriptions of the beneficial effects of the corresponding solution in the first aspect. Details are not described herein again.

In any one of the possible implementations of the first aspect or the second aspect, the N CSI-RSs are multiplexed in at least one of the following manners: time division multiplexing (time division multiplexing, TDM), frequency division multiplexing (frequency division multiplexing, FDM), or code division multiplexing (code division multiplexing, CDM).

In any one of the possible implementations of the first aspect or the second aspect, a primary synchronization signal (primary synchronization signal, PSS), a secondary synchronization signal (secondary synchronization signal, SSS), or a physical broadcast channel (physical broadcast channel, PBCH) of any one of the M SSBs indicates configuration information of one or more of the N CSI-RSs.

According to a third aspect, a communication apparatus is provided. The apparatus may implement the method according to any one of the first aspect and the second aspect and the possible implementations of the first aspect and the second aspect. The apparatus has a function of the first communication apparatus or the second communication apparatus. The apparatus is, for example, a terminal device, a functional module in the terminal device, a network device, or a functional module in the network device.

In an optional implementation, the apparatus may include modules that are in one-to-one correspondence with the methods/operations/steps/actions according to any one of the first aspect and the second aspect and the possible implementations of the first aspect and the second aspect. The module may be a hardware circuit or software, or may be implemented by a hardware circuit in combination with software. In an optional implementation, the apparatus includes a processing unit (also referred to as a processing module sometimes) and a communication unit (also referred to as a transceiver module, a communication module, and the like sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in either of the first aspect and the second aspect, the apparatus may include the communication unit and the processing unit.

According to a fourth aspect, an embodiment of this application further provides a communication apparatus, including one or more processors, configured to execute a computer program (or computer-executable instructions) stored in a memory. When the computer program (or the computer-executable instructions) is executed, the apparatus is caused to perform the method according to any one of the first aspect and the second aspect and the possible implementations of the first aspect and the second aspect.

In a possible implementation, the one or more processors and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or a communication interface of another type.

According to a fifth aspect, a computer-readable storage medium is provided. The computer-readable storage medium is configured to store a computer program or instructions. When the computer program or the instructions are run, the method according to any one of the first aspect and the second aspect and the possible implementations of the first aspect and the second aspect is implemented.

According to a sixth aspect, a computer program product including instructions is provided. When the computer program product is run on a computer, the method according to any one of the first aspect and the second aspect and the possible implementations of the first aspect and the second aspect is implemented.

According to a seventh aspect, an embodiment of this application further provides a communication apparatus, configured to perform the method according to any one of the first aspect and the second aspect and the possible implementations of the first aspect and the second aspect.

According to an eighth aspect, a chip or a chip system is provided. The chip or the chip system includes a circuit (for example, an analog circuit and/or a logic circuit; or it is understood as that the chip system includes one or more processors, and the one or more processors may include a circuit or the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message; and the output interface is configured to implement a sending function, that is, configured to send a message. The circuit may be configured to perform an operation other than the sending and receiving functions in the method according to any one of the first aspect and the second aspect and the possible implementations of the first aspect and the second aspect. The circuit may be further configured to transmit a message to the input/output interface, or receive, from the input/output interface, a message from another communication apparatus. The chip system may be configured to implement the method according to any one of the first aspect and the second aspect and the possible implementations of the first aspect and the second aspect. The chip system may include a chip, or may include a chip and another discrete component.

Optionally, the chip system may further include a memory, and the memory may be configured to store instructions. The circuit may invoke the instructions stored in the memory to implement a corresponding function.

According to a ninth aspect, a communication method is provided. The communication method may include the method implemented by the first communication apparatus according to any one of the first aspect and the possible implementations of the first aspect, and the method implemented by the second communication apparatus according to any one of the second aspect and the possible implementations of the second aspect.

According to a tenth aspect, a communication system is provided. The communication system may include a first communication apparatus and a second communication apparatus. The first communication apparatus may be configured to implement the method according to any one of the first aspect and the possible implementations of the first aspect, and the second communication apparatus may be configured to implement the method according to any one of the second aspect and the possible implementations of the second aspect.

For technical effects brought by the third aspect to the tenth aspect, refer to the descriptions of the beneficial effects of the corresponding solution in the first aspect. Details are not described herein again.

### BRIEF DESCRIPTION OF DRAWINGS

FIG. 1 is a diagram of an architecture of a wireless communication system according to an embodiment of this application;
FIG. 2 is a diagram of an SSB sending manner;
FIG. 3 is a schematic flowchart of a communication method according to an embodiment of this application;
FIG. 4 is a diagram of a relationship between M SSBs and N CSI-RSs according to an embodiment of this application;
FIG. 5 is a diagram of a relationship between a PDCCH and a PDSCH according to an embodiment of this application;
FIG. 6 is a diagram of another relationship between a PDCCH and a PDSCH according to an embodiment of this application;
FIG. 7 is a diagram of another relationship between a PDCCH and a PDSCH according to an embodiment of this application;
FIG. 8a to FIG. 8d are diagrams of inter-port multiplexing modes according to an embodiment of this application;
FIG. 9a to FIG. 9c are diagrams of other inter-port multiplexing modes according to an embodiment of this application;
FIG. 10a and FIG. 10b are diagrams of relationships between an SSB port and a CSI-RS port according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

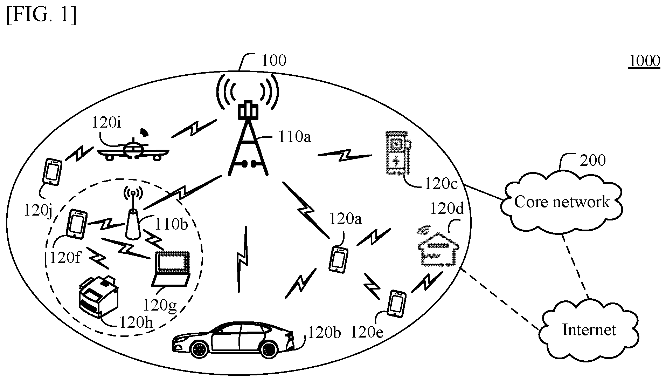

For ease of understanding of embodiments of this application, an application scenario to which this application is applicable is described by using an architecture of a communication system shown in FIG. 1 as an example. FIG. 1 is a diagram of a possible and non-limitative system. As shown in FIG. 1, the communication system 1000 includes a radio access network (radio access network, RAN) 100 and a core network (core network, CN) 200. The RAN 100 includes at least one network device (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, 4th generation (4th generation, 4G), long term evolution (long term evolution, LTE), 5th generation (5th generation, 5G), a new radio (new radio, NR) mobile communication system, or an evolved system after 5G (for example, a 6th generation (6th generation, 6G) mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

An apparatus provided in embodiments of this application may be used in the network device 110 or the terminal device 120. It may be understood that FIG. 1 shows only one possible communication system architecture to which embodiments of this application may be applied. In another possible scenario, the communication system architecture may alternatively include another device.

Another communication system to which embodiments of this application are applied may include a first communication apparatus and a second communication apparatus.

In an implementation method, the first communication apparatus is a network device or a module used in the network device, and the second communication apparatus is a terminal device or a module used in the terminal device. The network device is, for example, an access network device. The first communication apparatus communicates with the second communication apparatus through an air interface.

In another implementation method, the first communication apparatus is a terminal device or a module used in the terminal device, and the second communication apparatus is a network device or a module used in the network device. The first communication apparatus communicates with the second communication apparatus through an air interface.

In another implementation method, the first communication apparatus is a network device or a module used in the network device, and the second communication apparatus is a network device or a module used in the network device. The first communication apparatus communicates with the second communication apparatus through an air interface or in a wired manner.

In another implementation method, the first communication apparatus is a terminal device or a module used in the terminal device, and the second communication apparatus is a terminal device or a module used in the terminal device. The first communication apparatus communicates with the second communication apparatus through an air interface.

Certainly, in embodiments of this application, the first communication apparatus and the second communication apparatus may alternatively be devices of another type. For example, the first communication apparatus may be a device such as a cloud device or a cloud server, and the second communication apparatus is a device such as a cloud device or a cloud server. This is not limited in this application.

In embodiments of this application, the terminal device may be a device having wireless sending and receiving functions, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may be deployed on the land, including being deployed indoors or outdoors, and being deployed to be handheld or vehicle-mounted; or may be deployed on a water surface (for example, on a ship); or may be deployed in the air (for example, on an aircraft, a balloon, or a satellite). The terminal device may be a cellular phone, a mobile phone (mobile phone), a tablet computer (pad), a handheld device, a laptop computer, a wireless data card, a personal digital assistant computer, a wireless modem, a machine type communication terminal, a satellite terminal, a device mounted on a vehicle (for example, a car, a bicycle, an electric vehicle, an airplane, a ship, a train, or a high-speed railway), a mechanical arm, a workshop device, a wearable device (for example, a smartwatch, a smart band, or a pedometer), an uncrewed aerial vehicle, a robot, a smart point of sale (point of sale, POS) machine, customer-premises equipment (customer-premises equipment, CPE), a computer having wireless sending and receiving functions, a virtual reality (virtual reality, VR) terminal device, an augmented reality (augmented reality, AR) terminal device, a terminal device in industrial control (industrial control), a terminal device in self-driving (self-driving), a terminal device in remote medical (remote medical), a terminal device in a smart grid (smart grid), a terminal in transportation security (transportation safety), a terminal device in a smart city (smart city), or a terminal (for example, a smart home device such as a refrigerator, a television, an air conditioner, or a meter) in a smart home (smart home). The terminal device may alternatively be another device having a terminal function. A device form of the terminal is not limited in embodiments of this application. An apparatus configured to implement a function of the terminal device may be a terminal device, or may be an apparatus, for example, a chip system, that can support the terminal device in implementing the function. The apparatus may be mounted in the terminal device or used in conjunction with the terminal device. In embodiments of this application, the chip system may include a chip, or may include a chip and another discrete component.

In embodiments of this application, the network device is a device having wireless sending and receiving functions, and is configured to communicate with the terminal device or another network device. The network device may alternatively be a device, for example, a radio access network (radio access network, RAN) device or node, that can connect the terminal device to a wireless network. In embodiments of this application, the network device may include various forms of base stations, for example, a base station (base station), an evolved NodeB (evolved NodeB, eNodeB), a next generation NodeB (next generation NodeB/gNodeB, gNB), a macro base station, a micro base station (which is also referred to as a small cell), a relay station, an access point, a device that implements a base station function in a communication system evolved after a 5th generation (5th generation, 5G) technology, an access point (access point, AP) in a wireless local area network (wireless local area network, WLAN) system, an integrated access and backhaul (integrated access and backhaul, IAB) node, a transmitting and receiving point (transmitting and receiving point, TRP), a transmitting point (transmitting point, TP), a mobile switching center, or a device that undertakes a base station function in device-to-device (Device-to-Device, D2D) communication, vehicle-to-everything (vehicle-to-everything, V2X) communication, or machine-to-machine (machine-to-machine, M2M) communication. The network device may alternatively include a network device in a non-terrestrial communication network (non-terrestrial network, NTN) communication system, that is, may be deployed on a high-altitude platform or a satellite. In some possible scenarios, different network devices each implement some of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an open access network (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented via a software module, a hardware module, or a combination of a software module and a hardware module.

A form of the network device is not limited in embodiments of this application. An apparatus configured to implement a function of the network device may be a network device, or may be an apparatus, for example, a chip system, that can support the network device in implementing the function. The apparatus may be mounted in the network device or used in conjunction with the network device.

It may be understood that in this application, communication between a network device and a terminal device, communication between network devices, and communication between terminal devices may be performed by using a licensed spectrum, or may be performed by using an unlicensed spectrum, or may be performed by using both a licensed spectrum and an unlicensed spectrum. In addition, communication between a network device and a terminal device, communication between network devices, and communication between terminal devices may be performed by using a spectrum below 6 gigahertz (gigahertz, GHz), for example, by using a 700/900 megahertz (megahertz, MHz) or 2.1/2.6/3.5 GHz frequency band, or by using a spectrum above 6 GHz, for example, a millimeter wave or a terahertz (terahertz, THz) wave, or by using both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the smart transportation, and the smart city. The function of the terminal device may alternatively be performed by a module (for example, a chip or a modem) in the terminal device, or may be performed by an apparatus including the function of the terminal device.

In an evolution process of a communication system, a high throughput and massive connectivity have always been core challenges for a wireless communication network. To cope with the foregoing challenges, 5G communication proposes applications such as enhanced mobile broadband (enhanced mobile broadband, eMBB), ultra-reliable and low-latency communication (ultra-reliable and low-latency communication, URLLC), and massive machine type communication (massive machine type communication, mMTC) as technical objectives. A 6G communication system evolved after 5G definitely evolves toward a higher throughput, lower latency, higher reliability, a larger quantity of connections, higher spectrum utilization, and the like.

Technical terms in this application are described below.

### (1) SSB

The SSB includes a PSS, an SSS, and a PBCH. The PSS and the SSS are mainly used for time-frequency synchronization and definition of a physical cell identifier (physical cell identifier, PCI) of a cell. The PBCH or a PBCH payload (payload) carries some system information in a minimum amount, which is referred to as a master information block (master information block, MIB). The MIB carries some parameter information for SIB1 transmission, for example, a subcarrier spacing, a control resource set (control resource set, CORESET) for scheduling a SIB1, and a search space set (search space set, SS set).

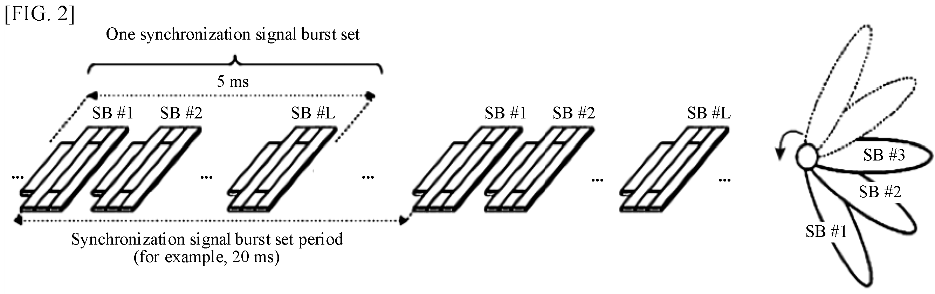

In NR, the SSB is transmitted in a beam sweeping mechanism. The beam sweeping is to transmit SSBs in different beam directions in a time division multiplexing mode. An SSB set in one beam sweeping period is referred to as one synchronization signal burst set (SS burst set). One SS burst set may be defined as one time interval of 5 milliseconds (ms). The use of beamforming on SSBs enables energy of SSBs transmitted in each beam direction to be more centralized, thereby improving coverage of the SSBs. An SSB transmitted in each beam direction has a dedicated identifier, and each SSB may represent one SSB beam. For example, in a frequency range 1 (frequency range 1, FR1), each cell supports a maximum of eight SSB beams, and the eight SSB beams are respectively an SSB #0 to an SSB #7. The frequency range 1 may be a frequency band below 6 gigahertz (GHz) (sub-6 GHz). FIG. 2 is a diagram of a plurality of SSBs transmitted in a TDM mode in one SS burst set period.

The SSB may be periodically and repeatedly transmitted in time domain. For example, the period may be 5 ms, 20 ms, 40 ms, 80 ms, or 160 ms. The repeated transmission herein may be considered as repetition of an SS burst set. To be specific, a plurality of SSB beams included in one SS burst set are repeatedly transmitted as a whole. For a terminal device that performs cell search, it may be assumed that an SSB repetition period is 20 ms. In addition, a MIB change period may be 80 ms. This means that for the terminal device that performs cell search, the SSB is repeatedly transmitted four times within 80 ms.

It should be noted that, optimal receive beams for different SSB transmit beams are different. Therefore, in addition to sending the SSB in a beam sweeping manner on a network device (for example, a terminal) side, a terminal device side also receives the SSB in a beam sweeping manner, to obtain an optimal transmit and receive beam pair.

### (2) SIB

A system information transmission process is mainly that a terminal device receives some necessary parameters related to camping on a cell and accessing a cell that are sent by a network device, including various system information blocks, for example, a SIB1, a SIB2, and other SIBs. A terminal device in an RRC idle state or an RRC inactive state further needs to listen to a paging (paging) message sent by the network device.

Generally, after detecting an SSB, the terminal device in initial access may receive the SIB1 based on a parameter related to reception of the SIB1 obtained from a MIB. In NR, the SIB1 is carried through a physical downlink shared channel (physical downlink shared channel, PDSCH), and is scheduled through a physical downlink control channel (physical downlink control channel, PDCCH). Specifically, the PDCCH carries downlink control information (downlink control information, DCI). The DCI includes information such as a time domain resource, a frequency domain resource, and a modulation and coding scheme for PDSCH transmission. Same as an SSB transmission mechanism, the SIB1 is also transmitted in a beam sweeping manner. To be specific, in each SSB beam direction, the network device sends a PDCCH and a PDSCH of the SIB1 by using the SSB beam. The terminal device may receive, in a manner of receiving the SSB, the PDCCH and the PDSCH of the SIB1 associated with the SSB.

After receiving the SIB1, the terminal device may continue to receive another SIB, a paging message, or the like as required. A transmission mode of the another SIB and the paging message may be similar to that of the SIB1.

It should be noted that the SIB1 and the another SIB are periodically and repeatedly transmitted, like the SSB. A change period of system information carried in the SIB1 is 160 ms, and the SIB1 may be repeatedly transmitted at a period of 20 ms within 160 ms. A transmission period of a SIB other than the SIB1 is configured by the SIB1.

### (3) Random access (random access, RA)

In NR, a terminal device completes uplink time synchronization with a network device through a random access procedure, and establishes an RRC connection to the network device. In NR, there are two random access procedure types: type-1 random access (type-1 RA) and type-2 random access (type-2 RA). The type-1 RA procedure is also referred to as a four-step random access (4-step RA) procedure, and the type-2 RA procedure is also referred to as a two-step random access (2-step RA) procedure.

In the type-1 RA procedure, the terminal device sends a preamble, that is, a random access message 1 (Msg1), through a PRACH. After sending the Msg1, the terminal starts a random access response window, and listens to, in the window, a random access response (random access response, RAR), that is, a random access message 2 (Msg2), sent by the network device. If the terminal successfully detects the RAR of the terminal, the terminal continues to send a random access message 3 (Msg3) based on an indication of the RAR. A main function of the Msg3 is to send an RRC connection setup request. If the terminal receives no RAR of the terminal, it is considered that current RA fails, and the terminal re-initiates, based on a fallback parameter indicated by the network device, an RA procedure until a maximum quantity of random access times is reached. After sending the Msg3, the terminal listens to and receives a random access message 4 (Msg4) delivered by the network device, where the Msg4 carries a contention resolution (contention resolution) identifier and an air interface parameter configuration for the terminal. If the terminal successfully receives the Msg4, the current RA succeeds; otherwise, the RA fails. If the RA succeeds, the terminal continues to send a Msg5, where the Msg5 is mainly used to send an RRC setup complete command. If the RA fails, the terminal re-initiates, based on a fallback parameter indicated by the network device, a random access procedure until a maximum quantity of random access times is reached.

The type-2 RA procedure may be understood as combining the first four steps into two steps based on the type-1 RA procedure. That is, the terminal may send a random access message A (MsgA), including a preamble and a terminal identifier. Correspondingly, the network device may send a random access message B (MsgB) to the terminal, including a contention resolution identifier, an air interface parameter configuration for the terminal, and the like. In other words, the MsgA may correspond to the Msg1 and the Msg3, and the MsgB may correspond to the Msg2 and the Msg4.

In NR, a PRACH resource is configured in association with an SSB. In other words, each SSB is associated with a dedicated PRACH resource, and PRACH resources associated with different SSB beams use different time domain resources, frequency domain resources, or code domain resources. For example, different SSBs are associated with different random access channel occasions (RACH occasions, ROs), and one RO may be considered as a time-frequency resource for transmitting the preamble.

When initiating RA, the terminal device may select one of the SSBs, and send the preamble by using a PRACH resource associated with the SSB. When replying to the terminal device with the Msg2, Msg4, or MsgB, the network device may send the Msg2, Msg4, or MsgB by using an SSB associated with a PRACH resource used by a detected preamble. Similarly, the terminal device receives the corresponding Msg2, Msg4, or MsgB in a manner of receiving the SSB associated with the preamble sent by the terminal device.

It may be understood that, the association between the PRACH resource and the SSB, on one hand, enables the Msg2, Msg4, or MsgB to be transmitted in a beamforming manner, improving coverage performance of the Msg2, Msg4, or MsgB, on the other hand, enables the Msg2, Msg4, or MsgB to be sent only on an SSB beam associated with the PRACH resource, rather than swept and sent on all SSB beams like the SIB or paging, thereby reducing resource overheads and improving system efficiency.

Currently, for a terminal in an RRC idle state or an RRC inactive state, how to improve signal coverage performance is an urgent technical problem to be resolved.

To resolve the foregoing technical problem, this application provides a communication method. The communication method may be implemented by a first communication apparatus and a second communication apparatus. Optionally, the first communication apparatus may be used as a terminal device, and the second communication apparatus may be used as a network device. The first communication apparatus may be a terminal device, or may be a component such as a module or a chip in the terminal device. The second communication apparatus may be a network device, or may be a component such as a module or a chip in the network device. The network device is, for example, a RAN or another access network device.

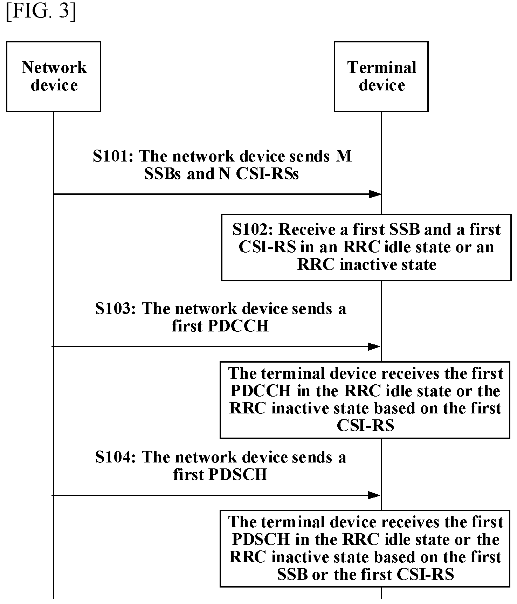

The following describes the method with reference to a procedure shown in FIG. 3. In FIG. 3, an example in which a terminal device is used as a first communication apparatus and a network device is used as a second communication apparatus is used for description. The terminal device in the following may alternatively be replaced with a terminal, a terminal apparatus, UE, a first communication apparatus, or the like, and the network device may alternatively be replaced with a base station, an access network device, a second communication apparatus, or the like. This is not specifically limited.

S101: The network device sends M SSBs and N CSI-RSs.

M and N are both positive integers greater than or equal to 1, and N is greater than or equal to M. For example, M is a value such as 8, 16, or 32. This is not specifically limited.

In this application, there is a correspondence between the M SSBs and the N CSI-RSs. That there is the correspondence between the M SSBs and the N CSI-RSs may be represented as follows: Any one of the M SSBs is quasi co-located with Q CSI-RSs of the N CSI-RSs, where Q is a positive integer greater than or equal to 1. In addition, any one of the N CSI-RSs is quasi co-located with one of the M SSBs. An advantage of quasi co-location is that when receiving a CSI-RS, the terminal device may receive the CSI-RS based on an SSB that is quasi co-located with the CSI-RS, so that CSI-RS receiving performance can be improved, and processing complexity of the terminal device can be reduced.

In this application, the "correspondence" may also be described as an "association relationship", and "corresponding to" may alternatively be described as "associated with". "Corresponding" may alternatively be described as "associated".

In this application, quasi co-location means that a large-scale parameter of a channel over which a symbol on one antenna port is conveyed can be inferred from a channel over which a symbol on another antenna port is conveyed. In other words, it may be considered that the two antenna ports are quasi co-located, or signals transmitted on the two antenna ports are quasi co-located.

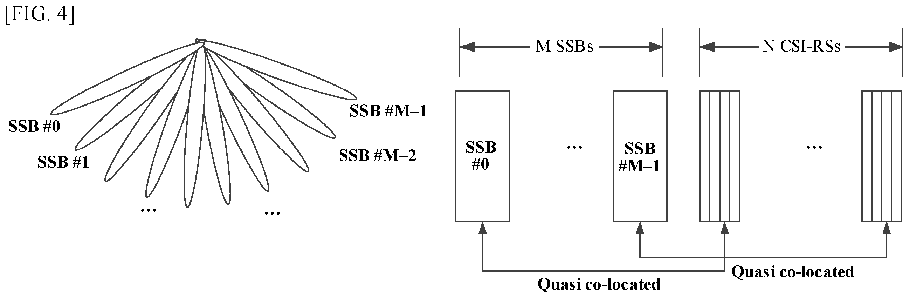

In an example, as shown in FIG. 4, each of the M SSBs may be quasi co-located with (N/M) CSI-RSs, that is, Q=N/M. Q is greater than 1. In FIG. 4, Q=4 is used as an example. This application does not limit Q to other values.

In a possible embodiment, a value of Q may be predefined, or may be preconfigured.

In this application, predefinition may be performed by using configuration information such as factory configuration, or may be performed according to a related protocol such as 3GPP. In addition, in this application, preconfiguration may be performed by the base station via a previous message or signaling. For example, after determining the configuration information, the base station configures the related configuration information for the terminal device via a message or information such as an RRC message, a MAC control element (control element, CE), or downlink control information (downlink control information, DCI).

In a possible embodiment, any SSB and one or more CSI-RSs associated with the SSB may be multiplexed and transmitted in a TDM mode, or multiplexed and transmitted in an FDM mode, or multiplexed and transmitted in a TDM mode and an FDM mode.

In S101, that the network device sends the M SSBs and the N CSI-RSs may alternatively be described as follows: The network device outputs the M SSBs and the N CSI-RSs. For example, "output" may mean that the network device sends the M SSBs and the N CSI-RSs to the terminal device. For another example, "output" may mean that a baseband unit in the network device outputs the M SSBs and the N CSI-RSs to a radio frequency unit. For another example, "output" may mean that a radio frequency unit in the network device sends the M SSBs and the N CSI-RSs to the terminal device through an air interface.

S102: The terminal device receives a first SSB and a first CSI-RS in an RRC idle state or an RRC inactive state.

For the terminal in the RRC idle state or the RRC inactive state, in an initial access procedure, the terminal device may perform cell search through SSB detection, to obtain a PCI and perform time-frequency synchronization with a cell. The terminal device does not need to receive all the N SSBs, but may receive one or more of the N SSBs based on an implementation. In other words, the first SSB may be a part of the M SSBs. For example, the first SSB is one SSB. The terminal device may further perform CSI-RS detection to obtain more refined beam information. The terminal device may receive one or more CSI-RSs among the N CSI-RSs based on an implementation. In other words, the first CSI-RS may be a part of the N CSI-RSs. For example, the first CSI-RS is one CSI-RS.

By extension, for a non-initial access procedure, the terminal device may also receive the SSB and/or the CSI-RS for time-frequency synchronization, or for various measurement processes such as channel state measurement and radio resource management measurement, or for a source of a quasi co-location relationship used for transmission of another channel or signal.

S103: The network device sends a first PDCCH. The first PDCCH may be used to schedule a first PDSCH. The first PDSCH may be used to carry one of a SIB, a paging message, a random access message 2, a random access message B, or a random access message 4, or the first PDSCH may carry downlink information transmitted for another terminal device in the RRC idle state or the inactive state.

Correspondingly, the terminal device may receive the first PDCCH in the RRC idle state or the RRC inactive state based on the first CSI-RS.

By extension, the terminal device may receive, in the RRC idle state or the RRC inactive state, the first PDCCH based on the first SSB, or receive the first PDCCH based on the first SSB and the first CSI-RS.

In S103, that the network device sends the first PDCCH may alternatively be described as follows: The network device outputs the first PDCCH. For example, "output" may mean that the network device sends the first PDCCH to the terminal device. For another example, "output" may mean that a baseband unit in the network device outputs the first PDCCH to a radio frequency unit. For another example, "output" may mean that a radio frequency unit in the network device sends the first PDCCH to the terminal device through an air interface.

S104: The network device sends the first PDSCH.

Correspondingly, the terminal device may receive the first PDSCH in the RRC idle state or the RRC inactive state based on the first SSB or the first CSI-RS.

In S104, that the network device sends the first PDSCH may alternatively be described as follows: The network device outputs the first PDSCH. For example, "output" may mean that the network device sends the first PDSCH to the terminal device. For another example, "output" may mean that a baseband unit in the network device outputs the first PDSCH to a radio frequency unit. For another example, "output" may mean that a radio frequency unit in the network device sends the first PDSCH to the terminal device through an air interface.

Based on the method shown in FIG. 3, the terminal device may receive, in the RRC idle state or the RRC inactive state, the first PDCCH based on the first SSB, or may receive the first physical downlink shared channel based on the first SSB or the first CSI-RS. The first SSB is one of the M SSBs, the first CSI-RS is one of the N CSI-RSs, and there is a correspondence between the M SSBs and the N CSI-RSs. For example, the correspondence is a quasi co-location relationship. Therefore, downlink transmission may be performed based on the CSI-RS and the SSB, so that channel coverage performance of the terminal device in the initial access procedure can be improved. In addition, according to the method, channel coverage can be enhanced without increasing a quantity of SSBs or with a small increase in the quantity of SSBs. In other words, channel resource overheads can be reduced as much as possible while channel coverage in the initial access procedure is improved.

The following describes implementations of the M SSBs in S101 and S102.

In this application, the M SSBs may have different identifiers (identifiers, IDs), indexes, or numbers. The M SSBs may be sent in a TDM mode, or may be sent in an FDM mode. Alternatively, one part of the M SSBs may be sent in a TDM mode, and the other part of the M SSBs are sent in an FDM mode.

Optionally, each SSB may include a PSS, an SSS, and a MIB.

The following describes implementations of the N CSI-RSs in S101 and S102.

In a possible embodiment, the N CSI-RSs have different IDs, and each identifier corresponds to one CSI-RS port (or port for short). In this case, any one of the N CSI-RSs has only one port, in other words, any CSI-RS is a single-port CSI-RS.

In another possible embodiment, the N CSI-RSs have less than N different IDs. For example, one or more CSI-RSs associated with a same SSB share a same ID. In this embodiment, CSI-RSs sharing a same ID may support one or more ports. For example, each SSB is associated with Q CSI-RSs, where Q>1. The N CSI-RSs may be considered as (N/Q) multi-port CSI-RSs, and any one of the (N/Q) multi-port CSI-RSs supports Q ports.

In an implementation of this application, time domain positions of the N CSI-RSs may be predefined or preconfigured. In an implementation, the N CSI-RSs are defined within a time period. In this case, the time domain positions of the N CSI-RSs may be considered as relative time domain positions within the time period. A length of the time period may be the same as a length of an existing SS burst set, that is, 5 ms, or may be 10 ms, 20 ms, or another length.

The N CSI-RSs defined within the foregoing time period may be referred to as a CSI-RS burst set (CSI-RS burst set). Optionally, refer to an SSB burst set. The CSI-RS burst set may be periodically and repeatedly transmitted, and a period of the CSI-RS burst set may be 5 ms, 10 ms, 20 ms, 40 ms, 80 ms, 160 ms, 320 ms, or the like. This is not specifically limited.

In another implementation of this application, time domain positions of the N CSI-RSs may be indicated by using the M SSBs. For example, any one of the M SSBs may indicate configuration information of one or more of the N CSI-RSs, and the configuration information of any CSI-RS may include at least one of the following configuration information: time domain resource information, frequency domain resource information, code domain resource information, and power control information.

Specifically, any SSB may indicate configuration information of one or more CSI-RSs that have an association relationship with the SSB. The configuration information of the CSI-RS may be carried in one or more of a PSS, an SSS, or a PBCH. For example, the SSB may indicate configuration information of Q CSI-RSs that have an association relationship with the SSB. Alternatively, the SSB may indicate configuration information of all CSI-RSs. In an example, when configurations of CSI-RSs corresponding to any two of the M SSBs are the same, configuration information of all CSI-RSs may be indicated by using one SSB.

The following describes an implementation of S103.

In an example, in S103, the network device may send N PDCCHs, and the first PDCCH may be one of the N PDCCHs. There may be a correspondence between the N PDCCHs and the N CSI-RSs. For example, the N PDCCHs are quasi co-located with the N CSI-RSs, or DMRSs of the N PDCCHs are quasi co-located with the N CSI-RSs. It may also be understood that there is a correspondence between the first PDCCH in the N PDCCHs and the first CSI-RS in the N CSI-RSs. For example, the N PDCCHs are in one-to-one correspondence with the N CSI-RSs. For example, the first PDCCH is quasi co-located with the first CSI-RS corresponding to the first PDCCH, or a DMRS of the first PDCCH is quasi co-located with the first CSI-RS corresponding to the first PDCCH.

In this example, the N PDCCHs may be sent based on the N CSI-RSs. For example, the network device may separately send one of the N PDCCHs at different time based on one of the N CSI-RSs.

In this application, transmitting a PDCCH based on a CSI-RS may mean that the network device sends, by using a CSI-RS beam, a PDCCH corresponding to a CSI-RS, or that the network device sends, by using a same spatial filter as that for sending a CSI-RS, a PDCCH corresponding to the CSI-RS, to ensure that the PDCCH is quasi co-located with the corresponding CSI-RS.

For example, this example may be applicable to system information transmission or paging message transmission. For example, the first PDCCH may be used to schedule a SIB or a paging message, that is, the first PDSCH may carry the SIB or the paging message.

In another example, in S103, the network device may send the first PDCCH, and there may be a correspondence between the first PDCCH and the first CSI-RS. For example, the first PDCCH is quasi co-located with the first CSI-RS, or a DMRS of the first PDCCH is quasi co-located with the first CSI-RS.

In this example, the network device may send the first PDCCH based only on the first CSI-RS, to schedule the first PDSCH.

For example, this example may be applicable to a random access procedure. For example, the first PDCCH may be used to schedule one of the random access message 2, the random access message B, or the random access message 4, that is, the first PDSCH may carry one of the random access message 2, the random access message B, or the random access message 4.

The following describes an implementation of S104.

In an example, in S104, the network device may send M PDSCHs, and the first PDSCH may be one of the M PDSCHs. There may be a correspondence between the M PDSCHs and the M SSBs. For example, the M PDSCHs are quasi co-located with the M SSBs, or DMRSs of the M PDSCHs are quasi co-located with the M SSBs. In other words, there is a correspondence between the first PDSCH and the first SSB. For example, the M PDSCHs are in one-to-one correspondence with the M SSBs. For example, the first PDSCH is quasi co-located with the first SSB corresponding to the first PDSCH, or a DMRS of the first PDSCH is quasi co-located with the first SSB corresponding to the first PDSCH.

Correspondingly, the terminal device may receive the first PDSCH in the RRC idle state or the RRC inactive state based on the first SSB.

In this example, the M PDSCHs may be sent based on the M SSBs. For example, the network device may separately send one of the M PDSCHs at different time based on one of the M SSBs.

In this application, transmitting a PDSCH based on an SSB may mean that the network device sends, by using an SSB beam, a PDSCH corresponding to an SSB, or that the network device sends, by using a same antenna as that for sending an SSB, a PDSCH corresponding to the SSB, to ensure that the PDSCH is quasi co-located with the corresponding SSB.

For example, this example may be applicable to system information transmission or paging message transmission. For example, the first PDSCH may carry a SIB or a paging message.

In another example, in S104, the network device may send N PDSCHs, and the first PDSCH may be one of the N PDSCHs. There may be a correspondence between the N PDCCHs and the N CSI-RSs. For example, the N PDSCHs are quasi co-located with the N CSI-RSs, or DMRSs of the N PDCCHs are quasi co-located with the N CSI-RSs. In other words, there is a correspondence between the first PDSCH and the first CSI-RS. For example, the N PDSCHs are in one-to-one correspondence with the N CSI-RSs. The first PDSCH is quasi co-located with the first CSI-RS corresponding to the first PDSCH, or a DMRS of the first PDSCH is quasi co-located with the first CSI-RS corresponding to the first PDSCH.

In this example, the N PDSCHs may be sent based on the N CSI-RSs. For example, the network device may separately send one of the N PDSCHs at different time based on one of the N CSI-RSs.

In this application, transmitting a PDSCH based on a CSI-RS may mean that the network device sends, by using a CSI-RS beam, a PDSCH corresponding to a CSI-RS, or that the network device sends, by using a same antenna as that for sending a CSI-RS, a PDCCH corresponding to the CSI-RS, to ensure that the PDCCH is quasi co-located with the corresponding CSI-RS.

For example, this example may be applicable to system information transmission or paging message transmission. For example, the first PDSCH may carry a SIB or a paging message.

In another example, in S103, the network device may send the first PDSCH, and there may be a correspondence between the first PDSCH and the first CSI-RS. For example, the first PDSCH is quasi co-located with the first CSI-RS, or a DMRS of the first PDSCH is quasi co-located with the first CSI-RS.

In this example, the network device may send the first PDSCH based only on the first CSI-RS.

For example, this example may be applicable to a random access procedure. For example, the first PDSCH may carry one of the random access message 2, the random access message B, or the random access message 4.

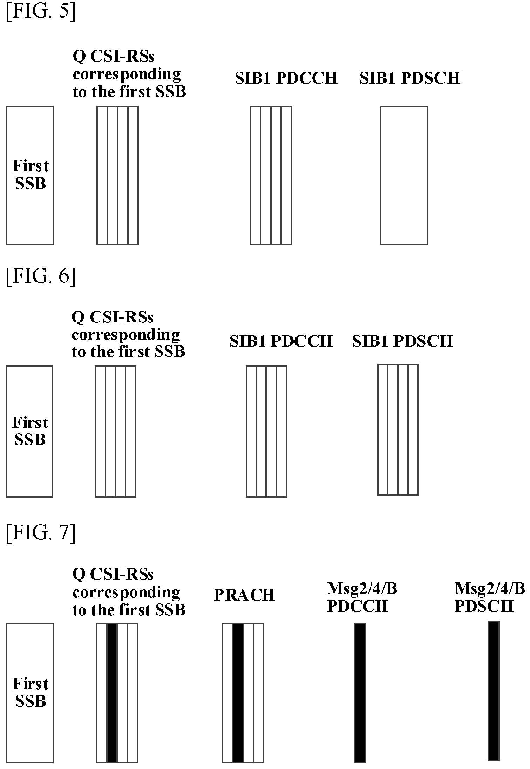

With reference to FIG. 5, the following describes an example transmission mode in which the first PDSCH carries a SIB1. FIG. 5 is described by using an example in which any SSB corresponds to Q=4 CSI-RSs. For a case in which Q is another value, refer to FIG. 5.

As shown in FIG. 5, a PDCCH that schedules the SIB1 (represented as a SIB1 PDCCH in FIG. 5) is transmitted by using N CSI-RS beams, and a PDSCH that carries the SIB1 (represented as a SIB1 PDSCH in FIG. 5) is transmitted by using M SSB beams. In other words, the network device may send N SIB1 PDCCHs and M SIB1 PDSCHs. The SIB1 PDSCH shown in FIG. 5 is one of the M SIB1 PDSCHs, the SIB1 PDSCH corresponds to the first SSB, and the first SSB is one of the M SSBs. In addition, SIB1 PDCCHs shown in FIG. 5 are Q SIB1 PDCCHs of the N SIB1 PDCCHs, and the Q SIB1 PDCCHs are respectively transmitted based on Q CSI-RSs corresponding to the first SSB. It may be understood that the SIB1 PDCCH may also be described as a PDCCH carrying DCI scrambled by using a system information-radio network temporary identifier (system information-radio network temporary identifier, SI-RNTI). The DCI scrambled by using the SI-RNTI may be used to schedule the SIB1.

It may be understood that, in the transmission mode in FIG. 5, for the same SSB, the Q corresponding SIB1 PDCCHs are respectively quasi co-located with the Q CSI-RSs that are associated with the SSB associated with the Q SIB1 PDCCHs, and the SIB1 PDSCH is quasi co-located with the associated SSB.

In this example, each of the M SSBs is associated with Q=4 SIB1 PDCCHs and one SIB1 PDSCH, and all the Q SIB1 PDCCHs may be used to schedule the SIB1 PDCCH. For an SSB, Q SIB1 PDCCHs corresponding to the SSB jointly schedule a same SIB1 PDSCH, which means that the Q SIB1 PDCCHs carry same scheduling information. Therefore, it may be considered that the Q SIB1 PDCCHs are repeatedly transmitted.

The terminal device may receive one or more of the N SIB1 PDCCHs and one or more of the M SIB1 PDSCHs based on an implementation. For example, the terminal device receives one of the N SIB1 PDCCHs and one of the M SIB1 PDSCHs, where the SIB1 PDCCH is the first PDCCH, and the SIB1 PDSCH is the first PDSCH. When receiving the SIB1 PDCCH, the terminal device may receive the SIB1 PDCCH in a manner of receiving an associated CSI-RS (for example, the first CSI-RS), and/or when receiving the SIB1 PDSCH, the terminal device may receive the SIB1 PDSCH in a manner of receiving an associated SSB (for example, the first SSB), to reduce receiving complexity of the terminal device.

In this example, a main reason why the SIB1 PDSCH is not transmitted by using the CSI-RS beam is that the SIB1 message is repeatedly transmitted every 20 ms. The terminal device may receive the repeatedly transmitted SIB1 a plurality of times to improve SSB demodulation performance, thereby reducing resource overheads of the SIB1, but at the cost of potentially prolonging time for receiving the SIB1 by the terminal.

Optionally, for transmission of a SIB other than the SIB1 or a paging message, refer to the solution shown in FIG. 5. To be specific, for the SIB other than the SIB1 or the paging message, the PDCCH may be transmitted based on the N CSI-RSs, and the PDSCH may be transmitted based on the M SSBs. For example, the SIB1 PDCCH in FIG. 5 may be replaced with a PDCCH of another SIB, and the SIB1 PDSCH may be replaced with a PDSCH of the another SIB; or the SIB1 PDCCH in FIG. 5 may be replaced with a PDCCH of a paging message, and the SIB1 PDSCH may be replaced with a PDSCH of the paging message.

With reference to FIG. 6, the following describes another example transmission mode in which the first PDSCH carries a SIB1. FIG. 6 is described by using an example in which any SSB corresponds to Q=4 CSI-RSs. For a case in which Q is another value, refer to FIG. 6.

Specifically, a PDCCH that schedules the SIB1 (represented as a SIB1 PDCCH in FIG. 6) is transmitted by using N CSI-RS beams, and a PDSCH that carries the SIB1 (represented as a SIB1 PDSCH in FIG. 6) is transmitted by using N CSI-RS beams. In other words, the network device may send N SIB1 PDCCHs and N SIB1 PDSCHs. SIB1 PDSCHs shown in FIG. 6 are Q SIB1 PDSCHs of M SIB1 PDSCHs, the Q SIB1 PDSCHs correspond to Q CSI-RSs, the Q CSI-RSs correspond to the first SSB, and the first SSB is one of the M SSBs. In addition, SIB1 PDCCHs shown in FIG. 6 are Q SIB1 PDCCHs of the N SIB1 PDCCHs, and the Q SIB1 PDCCHs are respectively transmitted based on the Q CSI-RSs corresponding to the first SSB.

A difference between the transmission mode shown in FIG. 6 and the transmission mode shown in FIG. 5 lies in that, in FIG. 6, both the SIB1 PDCCH and the SIB1 PDSCH are transmitted based on the N CSI-RSs. However, in FIG. 5, the SIB1 PDCCH is transmitted based on the N CSI-RSs, and the SIB1 PDSCH is transmitted based on the M SSBs.

In the transmission mode in FIG. 6, any one of the N CSI-RSs may be associated with one pair of SIB1 PDCCH and SIB1 PDSCH, and a SIB1 PDCCH in any pair schedules a SIB1 PDSCH in the pair. Any pair of SIB1 PDCCH and SIB1 PDSCH may be quasi co-located with an associated CSI-RS.

In other words, any one of the M SSBs may be associated with Q pairs of SIB1 PDCCH and SIB1 PDSCH, and a SIB1 PDCCH in any pair schedules a SIB1 PDSCH in the pair. In Q pairs of SIB1 PDCCH and SIB1 PDSCH associated with any SSB, the SIB1 PDCCH and the SIB1 PDSCH are respectively quasi co-located with M CSI-RSs associated with the associated SSB.

The terminal device may receive one or more of the N SIB1 PDCCHs and one or more of the N SIB1 PDSCHs based on an implementation. In addition, when receiving the SIB1 PDCCH/PDSCH, the terminal device may receive the SIB1 PDCCH/PDSCH in a manner of receiving the associated CSI-RS. When receiving the SIB1 PDCCH, the terminal device may receive the SIB1 PDCCH in a manner of receiving the associated CSI-RS (for example, the first CSI-RS), and/or when receiving the SIB1 PDSCH, the terminal device may receive the SIB1 PDSCH in a manner of receiving the associated CSI-RS (for example, the first CSI-RS), to reduce receiving complexity of the terminal device.

An advantage of the transmission mode shown in FIG. 6 is that both the SIB1 PDCCH and the SIB1 PDSCH are transmitted by using the CSI-RS beam, thereby improving coverage performance of the SIB1. In addition, in comparison with the transmission mode shown in FIG. 5, time for receiving the SIB1 by the terminal device may be shorter.

Optionally, for transmission of a SIB other than the SIB1 or a paging message, refer to the solution shown in FIG. 6. To be specific, for the SIB other than the SIB1 or the paging message, the PDCCH may be transmitted based on the N CSI-RSs, and the PDSCH may be transmitted based on the N CSI-RSs. For example, the SIB1 PDCCH in FIG. 6 may be replaced with a PDCCH of another SIB, and the SIB1 PDSCH may be replaced with a PDSCH of the another SIB; or the SIB1 PDCCH in FIG. 6 may be replaced with a PDCCH of a paging message, and the SIB1 PDSCH may be replaced with a PDSCH of the paging message.

Considering that a repetition period of the SIB other than the SIB1 is generally long, for example, 80 ms, 160 ms, 320 ms, 640 ms, or 1280 ms, using the example shown in FIG. 5 may cause a long time interval for the terminal device to receive the SIB. Therefore, for the SIB, compared with the manner shown in FIG. 5, the implementation shown in FIG. 6 may be preferentially used.

In addition, for the paging message, considering that the paging message is not periodically and repeatedly transmitted, to improve coverage performance of the PDSCH of the paging message, compared with the manner shown in FIG. 5, the implementation shown in FIG. 6 may be preferentially used. If the paging message also supports periodic repeated transmission, the PDCCH and the PDSCH of the paging message may also be transmitted with reference to the transmission mode shown in FIG. 5.

With reference to FIG. 7, the following describes an example transmission mode in which the first PDSCH carries a random access message. The random access message includes a random access message 2, a random access message B, or a random access message 4. For the random access message, both a PDCCH and a PDSCH may be associated with a CSI-RS.

As shown in FIG. 7, the PDCCH of the random access message may be used to schedule the PDSCH, and the PDSCH may be used to carry the random access message. Both the PDCCH and the PDSCH are associated with one of the N CSI-RSs (for example, the first CSI-RS, which is represented as black in FIG. 7), and the CSI-RS is associated with a PRACH resource. The PRACH may be a resource used by the terminal device to send a preamble.

After receiving one or more CSI-RSs sent by the network device, the terminal device may select one CSI-RS (for example, the first CSI-RS), and then send the preamble by using a PRACH resource associated with the selected CSI-RS. A manner in which the terminal device selects the CSI-RS used to send the preamble is not limited in this application. Then, when the terminal device receives the random access message, it may be assumed that the PDCCH and the PDSCH of the random access message are quasi co-located with the selected CSI-RS, that is, it is assumed that the PDCCH and the PDSCH of the random access message are quasi co-located with the CSI-RS associated with the PRACH resource used by the terminal device to send the preamble.

When sending the random access message, the network device may send the PDCCH and the PDSCH of the random access message in a manner of sending the preamble by the terminal device by using the CSI-RS associated with the PRACH resource. For example, the network device may send only the PDCCH and the PDSCH that correspond to the first CSI-RS, and does not need to send PDCCHs and PDSCHs that correspond to all the N CSI-RSs, so that transmission overheads can be reduced.

The random access message may be any one or more of the random access message 2, the random access message B, or the random access message 4. In a same four-step random access procedure, the random access message 2 and the random access message 4 may be associated with a same CSI-RS.

In this application, the N CSI-RSs may be multiplexed and transmitted in one or more of a TDM mode, an FDM mode, or a CDM mode.

In a possible embodiment, CSI-RSs associated with different SSBs are multiplexed in a TDM mode, and FDM and/or CDM are/is performed on Q CSI-RSs associated with any one of the M SSBs, or on Q ports of one piece of CSI associated with one SSB.

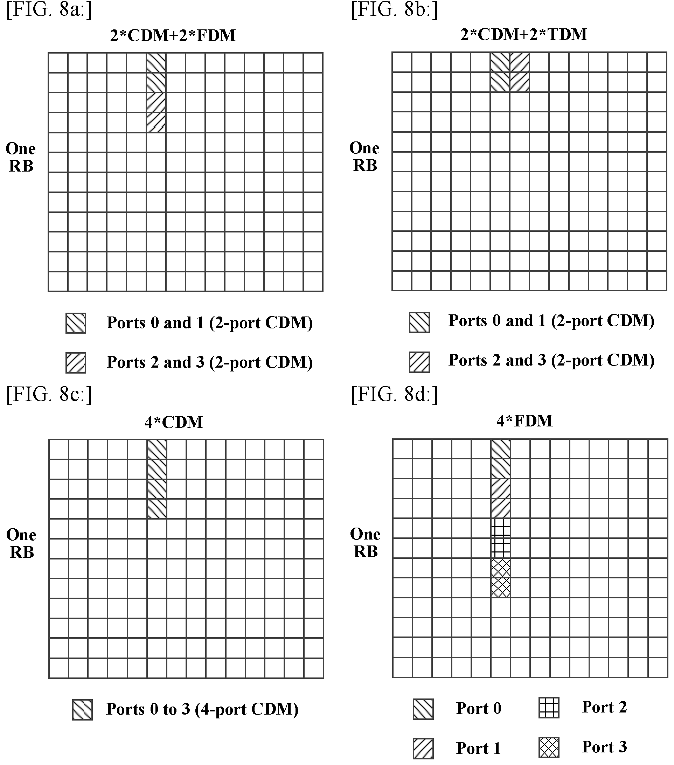

Q=4 is used as an example. Several possible time-frequency structures of Q CSI-RSs associated with a same SSB are shown in FIG. 8a to FIG. 8d. In FIG. 8a to FIG. 8d, each grid represents one resource block (resource block, RB), a horizontal coordinate represents time, and a vertical coordinate represents frequency.

For example, as shown in FIG. 8a, a CDM mode is used for multiplexing transmission on a port 0 and a port 1, and a CDM mode is used for multiplexing transmission on a port 2 and a port 3. In addition, an FDM mode is used for multiplexing transmission on the port 0 and the port 1, as well as the port 2 and the port 3.

For another example, as shown in FIG. 8b, a CDM mode is used for multiplexing transmission on a port 0 and a port 1, and a CDM mode is used for multiplexing transmission on a port 2 and a port 3. In addition, a TDM mode is used for multiplexing transmission on the port 0 and the port 1, as well as the port 2 and the port 3.

For another example, as shown in FIG. 8c, a CDM mode is used for multiplexing transmission on a port 0 to a port 3.

For another example, as shown in FIG. 8d, an FDM mode is used for multiplexing transmission on a port 0 to a port 3.

In addition, different orthogonal cover code (orthogonal cover code, OCC) lengths may also be used for the N CSI-RSs.

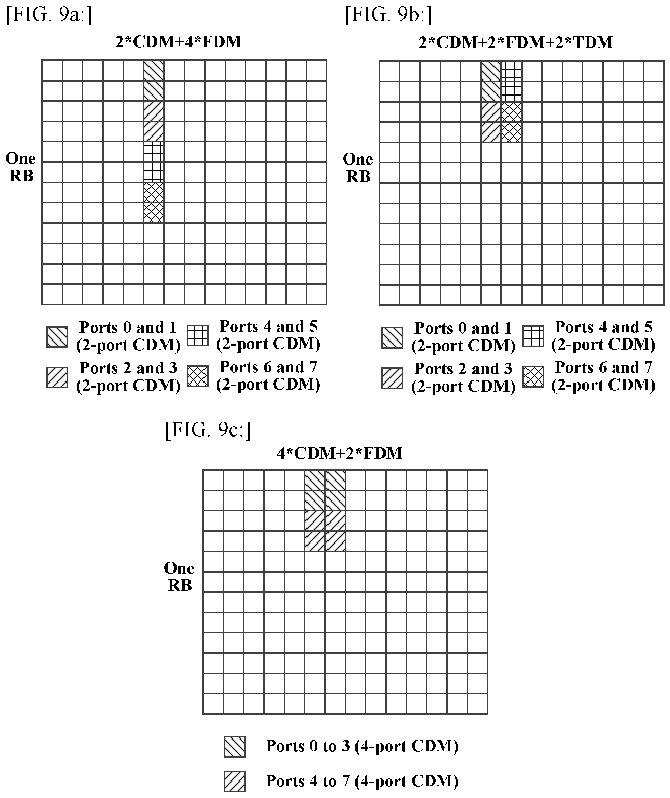

It may be understood that when Q=8, several possible time-frequency structures of Q CSI-RSs associated with a same SSB are shown in FIG. 9a to FIG. 9c.

For example, as shown in FIG. 9a, a CDM mode is used for multiplexing transmission on a port 0 and a port 1, a CDM mode is used for multiplexing transmission on a port 2 and a port 3, a CDM mode is used for multiplexing transmission on a port 4 and a port 5, and a CDM mode is used for multiplexing transmission on a port 6 and a port 7. In addition, an FDM mode is used for multiplexing transmission on the port 0 and the port 1, the port 2 and the port 3, the port 4 and the port 5, and the port 6 and the port 7.

For another example, as shown in FIG. 9b, a CDM mode is used for multiplexing transmission on a port 0 and a port 1, a CDM mode is used for multiplexing transmission on a port 2 and a port 3, a CDM mode is used for multiplexing transmission on a port 4 and a port 5, and a CDM mode is used for multiplexing transmission on a port 6 and a port 7. In addition, a TDM mode is used for multiplexing transmission on the port 0 and the port 1, as well as the port 4 and the port 5, and a TDM mode is used for multiplexing transmission on the port 2 and the port 3, as well as the port 6 and the port 7.

For another example, as shown in FIG. 9c, a CDM mode is used for multiplexing transmission on a port 0 to a port 3, and a CDM mode is used for multiplexing transmission on a port 4 to a port 7. An FDM mode is used for multiplexing transmission on the port 0 to the port 3, as well as the port 4 to the port 7.

In a possible implementation, a multiplexing mode of Q CSI-RSs associated with any one of the M SSBs, or of Q ports of one piece of CSI associated with one SSB may be predefined, or may be indicated by the base station. For example, the base station may indicate a multiplexing mode of a CSI-RS by using an SSB. In a specific example, a spare (spare) bit in the MIB may be used to indicate the multiplexing mode. Alternatively, an *a̅*_{*A̅*+6} bit and/or an *a̅*_{*A̅*+7} bit in eight timing bits added to a PBCH payload may indicate the multiplexing mode. *a̅* represents a set of bit information carried in the PBCH, and *a̅*_{*A̅*+6} and *a̅*_{*A̅*+7} respectively represent two bits in the bit information set. For example, *a̅*_{*A̅*+6} represents an (*A̅* + 6)^{th} bit in the bit set, and *a̅*_{*A̅*+7} represents an (*A̅* +7)^{th} bit in the bit set. For example, when values of the two bits are "00", it indicates that the multiplexing mode is TDM. For another example, when values of the two bits are "01", it indicates that the multiplexing mode is FDM. For another example, when values of the two bits are "10", it indicates that the multiplexing mode is CDM.

Optionally, the multiplexing mode of the CSI-RS may alternatively be determined or indicated by using a time-frequency resource of the CSI-RS, that is, time-frequency resources of different CSI-RSs may represent the multiplexing mode. In this case, the multiplexing mode of the CSI-RS may be indicated by using indication information of the time-frequency resource of the CSI-RS. Therefore, no separate information or bit is needed to indicate the multiplexing mode.

In embodiments of this application, bandwidth of a CSI-RS may be greater than or equal to bandwidth of an SSB associated with the CSI-RS.

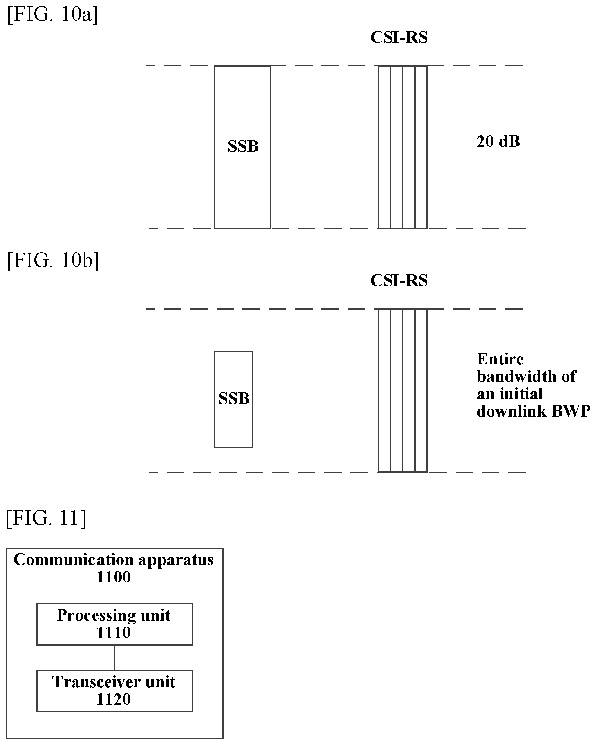

For example, the bandwidth of the CSI-RS is the same as the bandwidth of the SSB associated with the CSI-RS. As shown in FIG. 10a, both bandwidth of a CSI-RS and bandwidth of an SSB associated with the CSI-RS occupy 20 physical resource blocks (physical resource blocks, PRBs) or 2 RBs.

For another example, the bandwidth of the CSI-RS may occupy a part or an entirety of bandwidth of an initial downlink (initial downlink) bandwidth part (bandwidth part, BWP). The initial downlink BWP may be defined by a frequency domain resource of a CORESET0 configured in the MIB, and a definition manner of the initial downlink BWP does not fall within the limitation of this application. In this case, the bandwidth of the CSI-RS may be greater than the bandwidth of the SSB associated with the CSI-RS. For example, as shown in FIG. 10b, bandwidth of a CSI-RS may occupy entire bandwidth of an initial downlink BWP. When the bandwidth of the CSI-RS is greater than bandwidth of an SSB associated with the CSI-RS, the terminal device may be supported in performing CSI measurement and reporting in the RRC idle state or the RRC inactive state based on the CSI-RS. An implementation of CSI reporting is as follows:

Manner 1: The CSI reporting is performed through a random access procedure. For example, for the random access procedure, the terminal device may report a CSI measurement result through a physical uplink shared channel (physical uplink shared channel, PUSCH) used to carry a random access message 3 and a random access message A, or through uplink control information (physical uplink control channel, PUCCH) of a random access message 4 or a PUCCH of a random access message B. The PUCCH of the random access message 4 may be used for hybrid automatic repeat request-acknowledgment HARQ-ACK feedback of the random access message 4, and the PUCCH of the random access message B may be used for HARQ-ACK feedback of the random access message B.

In this implementation, performance of the random access procedure and subsequent channel or signal transmission can be improved.

Manner 2: The CSI reporting is performed through a small data transmission (small data transmission, SDT) process. For example, when the terminal device supports SDT, the terminal device may report a CSI measurement result through a PUCCH or a PUSCH. The SDT may include an RA-based SDT or a non-RA-based SDT. This is not specifically limited. In this implementation, SDT transmission performance can be improved.

In a possible implementation, in embodiments of this application, processes such as cell selection/reselection and RRM measurement in the idle state are still performed based on SSBs. The CSI-RS in this application is used only for transmission of a SIB and another common channel/signal. The CSI-RS in this application may alternatively be replaced with another reference signal. For example, a reference signal having a CSI-RS function in this application may have another name.

In a possible implementation, in embodiments of this application, the SSB associated with the CSI-RS may be a cell-defined SSB (cell-defined SSB, CD-SSB). In other words, a non-cell-defined SSB (non-cell-defined SSB, NCD-SSB) may not be associated with the CSI-RS. The CD-SSB may be considered as an SSB associated with the SIB1, and the NCD-SSB may be considered as an SSB not associated with the SIB1. Because the CD-SSB is associated with the SIB1, the CD-SSB may be used by the terminal device to obtain the SIB1, and may be used in a process such as initial access of the terminal device. The NCD-SSB can be used only for measurement, and cannot be used in a process such as initial access of the terminal device.

It may be understood that, to implement functions in the foregoing embodiments, the communication apparatus provided in this application may include a corresponding hardware structure and/or software module for performing functions of the first communication apparatus and/or the second communication apparatus. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

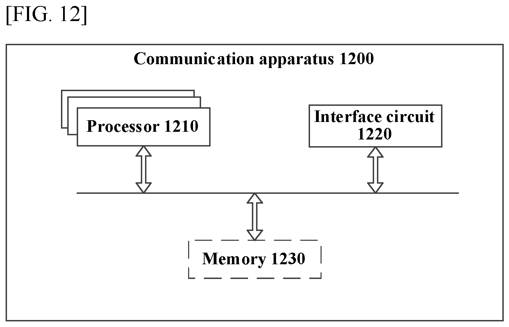

FIG. 11 and FIG. 12 each are a diagram of a structure of a possible communication apparatus according to an embodiment of this application. These communication apparatuses may be configured to implement functions of the first communication apparatus and/or the second communication apparatus in the foregoing method embodiments, and therefore can also achieve beneficial effects of the foregoing method embodiments. The first communication apparatus and/or the second communication apparatus each may serve as a terminal or a network device. In embodiments of this application, the communication apparatus may be the terminal or the network device shown in FIG. 1, or may be a module (for example, a chip) used in the terminal or the network device.

As shown in FIG. 11, the communication apparatus 1100 includes a processing unit 1110 and a transceiver unit (or an interface unit) 1120. The communication apparatus 1100 is configured to implement a function of the terminal or the network device in the method embodiment shown in FIG. 3.

When the communication apparatus 1100 is configured to implement the function of the network device in the method embodiment shown in FIG. 3, the transceiver unit 1120 may be configured to send M SSBs and N CSI-RSs. The processing unit 1110 may be configured to generate the M SSBs and the N CSI-RSs. The transceiver unit 1120 may be further configured to send a first PDCCH and a first PDSCH.

When the communication apparatus 1100 is configured to implement the function of the network device in the method embodiment shown in FIG. 3, the transceiver unit 1120 may be configured to receive a first SSB and a first CSI-RS in an RRC idle state or an RRC inactive state. The transceiver unit 1120 may be further configured to receive the first PDCCH in the RRC idle state or the RRC inactive state based on the first CSI-RS, and receive the first PDSCH in the RRC idle state or the RRC inactive state based on the first SSB or the first CSI-RS.

For more detailed descriptions of actions related to the processing unit 1110 and the transceiver unit 1120, refer to related descriptions in the method embodiment shown in FIG. 3.

As shown in FIG. 12, the communication apparatus 1200 includes one or more processors 1210 and an interface circuit 1220. The processor 1210 and the interface circuit 1220 are coupled to each other. It may be understood that, the interface circuit 1220 may be a transceiver or an input/output interface. Optionally, the communication apparatus 1200 may further include a memory 1230, configured to: store instructions executed by the processor 1210, store input data needed by the processor 1210 to run the instructions, or store data generated after the processor 1210 runs the instructions.

When the communication apparatus 1200 is configured to implement the method shown in FIG. 3, the processor 1210 is configured to implement a function of the processing unit 1110, and the interface circuit 1220 is configured to implement a function of the transceiver unit 1120.

When the communication apparatus is a module or a chip used in the terminal device, the module or the chip implements a function of the terminal device in the foregoing method embodiments. The module or the chip receives information via another module (for example, a radio frequency module or an antenna), and the information may be transmitted to the module or the chip after being received by the another module through an air interface. Alternatively, the module or the chip sends information to another module (for example, a radio frequency module or an antenna), so that the another module sends the information through an air interface.

When the communication apparatus is a module or a chip used in a network device (for example, a base station), the communication apparatus implements a function of the network device in the foregoing method embodiments. The module or the chip may be configured to receive information from another module (for example, a radio frequency module or an antenna), and the information is received by the another module through an air interface. Alternatively, the module or the chip sends information to another module (for example, a radio frequency module or an antenna), so that the another module sends the information through an air interface. The module or the chip herein may be a baseband chip, may be a CU, a DU, or another module, or may be an apparatus in an O-RAN architecture, for example, an apparatus such as an open CU or an open DU.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or an O-RAN. The processor and the storage medium may exist in the base station or the O-RAN as discrete components.

An embodiment of this application further provides a computer-readable storage medium. The computer-readable storage medium stores instructions, and the instructions may also be referred to as a computer program, computer program code, or the like. The instructions are run on a computer, so that the computer performs the methods in FIG. 3 in the foregoing method embodiment and embodiments of this application.

An embodiment of this application further provides a computer program product, including a computer program or instructions. When the computer program or the instructions are run on a computer, the methods in FIG. 3 and embodiments of this application are implemented.

An embodiment of this application further provides a chip or a chip system, including a circuit (for example, an analog circuit and/or a logic circuit; or it is understood as that the chip system includes one or more processors, and the one or more processors may include a circuit or the like), or it is understood as that the chip includes a processor. The circuit or the processor is coupled to a memory, and is configured to execute a computer program or instructions stored in the memory, so that the methods in FIG. 3 and embodiments of this application are implemented. The chip or the chip system may further include an input/output interface. For example, an example in which the chip implements a function of an access network device is used. The chip may receive information from another module (for example, a radio frequency or an antenna) in the access network device through an input/output interface, and the information may be sent by a terminal to the access network device. Alternatively, the chip may send information to another module (for example, a radio frequency or an antenna) in the access network device through an input/output interface, and the information is sent by the access network device to a terminal.

An embodiment of this application further provides a communication system, including a first communication apparatus and a second communication apparatus. The first communication apparatus and the second communication apparatus may be respectively configured to implement functions of the terminal and the network device in this application.

All or some of the foregoing embodiments may be implemented by using software, hardware, firmware, or any combination thereof. When the software is used for implementation, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and represents that three relationships may exist. For example, A and/or B may represent the following three cases: Only A exists, both A and B exist, and only B exists, where A and B may be singular or plural. In the text descriptions of this application, the character "/" generally represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving a first synchronization signal/physical broadcast channel block SSB and a first channel state information-reference signal CSI-RS in a radio resource control RRC idle state or an RRC inactive state, wherein the first SSB is one of M SSBs, the first CSI-RS is one of N CSI-RSs, there is a correspondence between the M SSBs and the N CSI-RSs, both M and N are positive integers greater than or equal to 1, and N is greater than or equal to M; and
receiving a first physical downlink control channel in the RRC idle state or the RRC inactive state based on the first CSI-RS; or
receiving a first physical downlink shared channel in the RRC idle state or the RRC inactive state based on the first SSB or the first CSI-RS, wherein the first physical downlink control channel is used to schedule the first physical downlink shared channel.

2. The method according to claim 1, wherein the receiving the first physical downlink control channel based on the first SSB or the first CSI-RS comprises:
receiving the first physical downlink control channel based on the first CSI-RS, wherein the first physical downlink control channel is one of N physical downlink control channels, and there is a correspondence between the N physical downlink control channels and the N CSI-RSs.

3. The method according to claim 2, wherein that there is the correspondence between the N physical downlink control channels and the N CSI-RSs comprises:
the N physical downlink control channels are quasi co-located with the N CSI-RSs; or
demodulation reference signals DMRSs of the N physical downlink control channels are quasi co-located with the N CSI-RSs.

4. The method according to any one of claims 1 to 3, wherein the receiving the first physical downlink shared channel based on the first SSB or the first CSI-RS comprises:
receiving the first physical downlink shared channel based on the first SSB, wherein the first physical downlink shared channel is one of M physical downlink shared channels, and there is a correspondence between the M physical downlink shared channels and the M SSBs.

5. The method according to claim 4, wherein that there is the correspondence between the M physical downlink shared channels and the M SSBs comprises:
the M physical downlink shared channels are quasi co-located with the M SSBs; or
DMRSs of the M physical downlink shared channels are quasi co-located with the M SSBs.

6. The method according to any one of claims 1 to 3, wherein the receiving the first physical downlink shared channel based on the first SSB or the first CSI-RS comprises:
receiving the first physical downlink shared channel based on the first CSI-RS, wherein the first physical downlink shared channel is one of N physical downlink shared channels, and there is a correspondence between the N physical downlink shared channels and the N CSI-RSs.

7. The method according to claim 6, wherein that there is the correspondence between the N physical downlink shared channels and the N CSI-RSs comprises:
the N physical downlink shared channels are quasi co-located with the N CSI-RSs; or
demodulation reference signals DMRSs of the N physical downlink shared channels are quasi co-located with the N CSI-RSs.

8. The method according to any one of claims 2 to 7, wherein
each of the N physical downlink shared channels carries a system information block SIB;
each of the M physical downlink shared channels carries a SIB;
each of the N physical downlink shared channels carries a paging message; or
each of the M physical downlink shared channels carries a paging message.

9. The method according to claim 1, wherein the receiving the first physical downlink control channel based on the first SSB or the first CSI-RS comprises:
receiving the first physical downlink control channel based on the first CSI-RS, wherein there is a correspondence between the first physical downlink control channel and the first CSI-RS.

10. The method according to claim 9, wherein that there is the correspondence between the first physical downlink control channel and the first CSI-RS comprises:
the first physical downlink control channel is quasi co-located with the first CSI-RS; or
a demodulation reference signal DMRS of the first physical downlink control channel is quasi co-located with the first CSI-RS.

11. The method according to any one of claims 1, 9, and 10, wherein the receiving the first physical downlink shared channel based on the first SSB or the first CSI-RS comprises:
receiving the first physical downlink shared channel based on the first CSI-RS, wherein there is a correspondence between the first physical downlink shared channel and the first CSI-RS.

12. The method according to claim 11, wherein that there is the correspondence between the first physical downlink shared channel and the first CSI-RS comprises:
the first physical downlink shared channel is quasi co-located with the first CSI-RS; or
a demodulation reference signal DMRS of the first physical downlink shared channel is quasi co-located with the first CSI-RS.

13. The method according to any one of claims 1 and 9 to 12, wherein
the first physical downlink shared channel carries a random access message 2, a random access message B, or a random access message 4.

14. The method according to any one of claims 1 and 9 to 13, wherein the method further comprises:
sending a random access preamble preamble by using a first physical random access channel PRACH resource, wherein there is a correspondence between the first PRACH resource and the first CSI-RS.

15. The method according to any one of claims 1 to 14, wherein that there is the correspondence between the M SSBs and the N CSI-RSs comprises:
any one of the M SSBs is quasi co-located with Q CSI-RSs of the N CSI-RSs, wherein Q is a positive integer greater than or equal to 1.

16. The method according to any one of claims 1 to 15, wherein
any one of the M SSBs indicates configuration information of one or more of the N CSI-RSs, and the configuration information comprises at least one of the following configuration information: time domain resource information, frequency domain resource information, code domain resource information, and power control information.

17. A communication method, comprising:
sending M SSBs and N CSI-RSs, wherein there is a correspondence between the M SSBs and the N CSI-RSs, both M and N are positive integers greater than or equal to 1, and N is greater than or equal to M; and
sending a first physical downlink control channel, wherein there is a correspondence between the first physical downlink control channel and a first CSI-RS, and the first CSI-RS is one of the N CSI-RSs; or
sending a first physical downlink shared channel, wherein there is a correspondence between the first physical downlink shared channel and the first CSI-RS or a first SSB, the first SSB is one of the M SSBs, and the first physical downlink control channel is used to schedule the first physical downlink shared channel; and
the first physical downlink shared channel carries one of a SIB, a paging message, a random access message 2, a random access message B, or a random access message 4.

18. The method according to claim 17, wherein the sending the first physical downlink control channel comprises:
sending N physical downlink control channels, wherein the first physical downlink control channel is one of the N physical downlink control channels, and there is a correspondence between the N physical downlink control channels and the N CSI-RSs.

19. The method according to claim 18, wherein that there is the correspondence between the N first physical downlink control channels and the N CSI-RSs comprises:
the N physical downlink control channels are quasi co-located with the N CSI-RSs; or
DMRSs of the N physical downlink control channels are quasi co-located with the N CSI-RSs.

20. The method according to any one of claims 17 to 19, wherein the sending the first physical downlink shared channel comprises:
sending M physical downlink shared channels, wherein the first physical downlink shared channel is one of the M physical downlink shared channels, and there is a correspondence between the M physical downlink shared channels and the M SSBs.

21. The method according to claim 20, wherein that there is the correspondence between the M physical downlink shared channels and the M SSBs comprises:
the M physical downlink shared channels are quasi co-located with the M SSBs; or
DMRSs of the M physical downlink shared channels are quasi co-located with the M SSBs.

22. The method according to any one of claims 17 to 21, wherein the sending the first physical downlink shared channel comprises:
sending N physical downlink shared channels, wherein the first physical downlink shared channel is one of the N physical downlink shared channels, and there is a correspondence between the N physical downlink shared channels and the N CSI-RSs.

23. The method according to claim 22, wherein that there is the correspondence between the N physical downlink shared channels and the N CSI-RSs comprises:
the N physical downlink shared channels are quasi co-located with the N CSI-RSs; or
demodulation reference signals DMRSs of the N physical downlink shared channels are quasi co-located with the N CSI-RSs.

24. The method according to any one of claims 18 to 23, wherein
each of the N physical downlink shared channels carries a SIB;
each of the M physical downlink shared channels carries a SIB;
each of the N physical downlink shared channels carries a paging message; or
each of the M physical downlink shared channels carries a paging message.

25. The method according to any one of claims 17 to 24, wherein that there is the correspondence between the first physical downlink control channel and the first CSI-RS comprises:
the first physical downlink control channel is quasi co-located with the first CSI-RS; or
a demodulation reference signal DMRS of the first physical downlink control channel is quasi co-located with the first CSI-RS.

26. The method according to any one of claims 17 to 25, wherein that there is the correspondence between the first physical downlink shared channel and the first CSI-RS comprises:
the first physical downlink shared channel is quasi co-located with the first CSI-RS; or
a demodulation reference signal DMRS of the first physical downlink shared channel is quasi co-located with the first CSI-RS.

27. The method according to any one of claims 17, 25, and 26, wherein the method further comprises:
receiving a preamble by using a first PRACH resource, wherein there is a correspondence between the first PRACH resource and the first CSI-RS, and the first CSI-RS is one of the N CSI-RSs.

28. The method according to any one of claims 17 to 27, wherein that there is the correspondence between the M SSBs and the N CSI-RSs comprises:
any one of the M SSBs is quasi co-located with Q CSI-RSs of the N CSI-RSs, wherein Q is a positive integer greater than or equal to 1.

29. The method according to any one of claims 17 to 28, wherein
any one of the M SSBs indicates configuration information of one or more of the N CSI-RSs, and the configuration information comprises at least one of the following configuration information: time domain resource information, frequency domain resource information, code domain resource information, and power control information.

30. A communication method, comprising:
sending, by a second communication apparatus, M SSBs and N CSI-RSs, wherein there is a correspondence between the M SSBs and the N CSI-RSs, both M and N are positive integers greater than or equal to 1, and N is greater than or equal to M;
receiving, by a first communication apparatus, a first SSB and a first CSI-RS in an RRC idle state or an RRC inactive state, wherein the first SSB is one of the M SSBs, and the first CSI-RS is one of the N CSI-RSs; and
sending, by the second communication apparatus, a first physical downlink control channel, and receiving, by the first communication apparatus, the first physical downlink control channel in the RRC idle state or the RRC inactive state based on the first CSI-RS; or
sending, by the second communication apparatus, a first physical downlink shared channel, and receiving, by the first communication apparatus, the first physical downlink shared channel in the RRC idle state or the RRC inactive state based on the first SSB or the first CSI-RS, wherein
the first physical downlink control channel is used to schedule the first physical downlink shared channel.

31. A communication apparatus, comprising one or more processors, wherein the one or more processors are configured to execute a computer program or instructions, to implement the method according to any one of claims 1 to 16, or implement the method according to any one of claims 17 to 29.

32. A chip or a chip system, comprising a circuit, wherein the circuit is configured to execute a computer program or instructions, to implement the method according to any one of claims 1 to 16, or implement the method according to any one of claims 17 to 29.

33. A computer-readable storage medium, wherein the storage medium stores a computer program or instructions, and when the computer program or the instructions are executed by a communication apparatus, the method according to any one of claims 1 to 16 is implemented, or the method according to any one of claims 17 to 29 is implemented.

34. A computer program product, wherein when the computer program product is executed by a computer, the computer is caused to perform the method according to any one of claims 1 to 16, or perform the method according to any one of claims 17 to 29.
